# EUROPÄISCHE PATENTANMELDUNG

(11) **EP 1 054 531 A2**
(43) Veröffentlichungstag der Anmeldung: **22.11.2000**
(21) Anmeldenummer: 00109837.5
(22) Anmeldetag: 10.05.2000
(51) Int. Cl.: H04L 12/403

(54) **Verfahren zur seriellen Übertragung digitaler Daten**

(30) Priorität: 21.05.1999 DE 19923327
(71) Anmelder: DaimlerChrysler AG, 70567 Stuttgart (DE)
(72) Erfinder: Wolfram, Andreas, 78315 Radolfzell 14 (DE)
(74) Vertreter: Mader, Wilfried

(57) **Zusammenfassung**

Bei einem Verfahren zur Übertragung digitaler Daten zwischen zwei oder mehreren Stationen werden üblicherweise eine der Stationen als Master-Station in einem die Datenübertragung steuernden Master-Betriebsmodus und die anderen Stationen als Slave-Stationen in einem durch die Master-Station gesteuerten Slave-Betriebsmodus betrieben. Die Slave-Stationen können von sich aus keine Datenübertragung einleiten. Das neue Verfahren soll die Einleitung der Datenübertragung durch jede der Stationen ermöglichen

Die Stationen sind sowohl in den Slave-Betriebsmodus als auch in den Master-Betriebsmodus schaltbar und zeigen sich ihren Betriebsmodus gegenseitig jeweils durch ein Modussignal an. Eine Station verbleibt dabei nur solange im Master-Betriebsmodus geschaltet, solange sie Daten aussendet und wird zum Aussenden von Daten erst dann aus dem Slave-Betriebsmodus in den Master-Betriebsmodus geschaltet wird, wenn sie anhand des Modussignals jeder anderen Station erkennt, daß keine andere Station im Master-Betriebsmodus betrieben wird.

Serielle Übertragung digitaler Daten in einem Multiprozessorsystem.

## Beschreibung

Die Erfindung betrifft ein Verfahren zur Übertragung digitaler Daten zwischen mindestens zwei Stationen und ein Datenübertragungssystem zur Durchführung des Verfahrens.

Bei Verfahren zur Übertragung digitaler Daten zwischen zwei oder mehreren Stationen werden üblicherweise eine der Stationen als Master-Station in einem Master-Betriebsmodus und jede andere Stationen als Slave-Station in einem Slave-Betriebsmodus betrieben. Die Master-Station initiiert und steuert die Datenübertragung; die Slave-Stationen hingegen können von sich aus keine Datenübertragung einleiten, sondern müssen warten, bis sie von der Master-Station zum Aussenden von Daten aufgefordert werden.

Der wesentlichen Nachteil eines derartigen Verfahrens besteht darin, daß die Master-Station dauernd überprüfen muß, ob bei den Slave-Stationen Daten zur Übertragung vorliegen. Dies hat zur Folge, daß das Verfahren in einem Multiprozessorsystem ohne fest vorgegebener Master-Slave-Beziehung nicht einsetzbar ist.

Der Erfindung liegt die Aufgabe zugrunde, ein Verfahren gemäß dem Oberbegriff des Patentanspruchs 1 anzugeben, bei dem jede Station von sich aus die Übertragung von Daten starten kann. Der Erfindung liegt ferner die Aufgabe zugrunde, ein Datenübertragungssystem zur Durchführung dieses Verfahrens anzugeben.

Die Aufgabe wird durch die Merkmale des Patentanspruchs 1 gelöst und die weitere Aufgabe wird durch die Merkmale des Patentanspruchs 5 gelöst.

Vorteilhafte Ausgestaltungen und Weiterbildungen der Erfindung ergeben sich aus den Unteransprüchen.

Erfindungsgemäß ist jede Station sowohl in den Slave-Betriebsmodus als auch in den Master-Betriebsmodus schaltbar. Im Master-Betriebsmodus sendet eine Station Daten aus und steuert die Datenübertragung, während sie im Slave-Betriebsmodus empfangsbereit für Daten ist. Die Stationen zeigen sich ihren Betriebsmodus gegenseitig jeweils durch ein Modussignal an und sie verbleiben jeweils nur solange im Master-Betriebsmodus geschaltet, solange sie Daten aussenden, d. h. sie werden bei ruhendem Datenverkehr in den Slave-Betriebsmodus geschaltet und sie werden jeweils nur für die Zeit, in der sie Daten aussenden, in den Master-Betriebsmodus geschaltet. Eine Station, die einen Befehl zum Aussenden von Daten erhält, überprüft zunächst durch Auswertung des Modussignals jeder anderen Station, ob eine andere Station im Master-Betriebsmodus betrieben wird. Sie wird zur Übertragung der Daten aus dem Slave-Betriebsmodus in den Master-Betriebsmodus geschaltet, wobei die Einschaltung des Master-Betriebsmodus erst dann erfolgt, wenn keine andere Station im Master-Betriebsmodus betrieben wird; gegebenenfalls wird gewartet, bis jede andere Station im Slave-Betriebsmodus betrieben wird.

In einer vorteilhaften Weiterbildung des Verfahrens werden die Daten seriell übertragen. Jede im Master-Betriebsmodus betriebene Station generiert dabei ein Taktsignal zur Synchronisation der Datenübertragung und sendet die Daten als serielle Datenbitfolgen in zum Taktsignal synchronen Bitzellen aus und jede im Slave-Betriebsmodus betriebene Station übernimmt die zu ihr gesendeten Daten nach Maßgabe des Taktsignals.

Vorzugsweise sendet die im Master-Betriebsmodus betriebene Station eine vorgegebene Anzahl von Datenbits aus und wartet mit dem Aussenden weiterer Datenbits, bis der Empfang der ausgesendeten Datenbits von jeder anderen Station bestätigt wird.

Der Empfang der vorgegebenen Anzahl von Datenbits wird von jeder im Slave-Betriebsmodus betriebenen Station vorzugsweise durch Invertierung eines Bestätigungssignals bestätigt, welches der im Master-Betriebsmodus betriebenen Station zugeführt wird.

Die Erfindung eignet sich bestens zur Übertragung von Daten zwischen Mikroprozessoren eines Multiprozessorsystems.

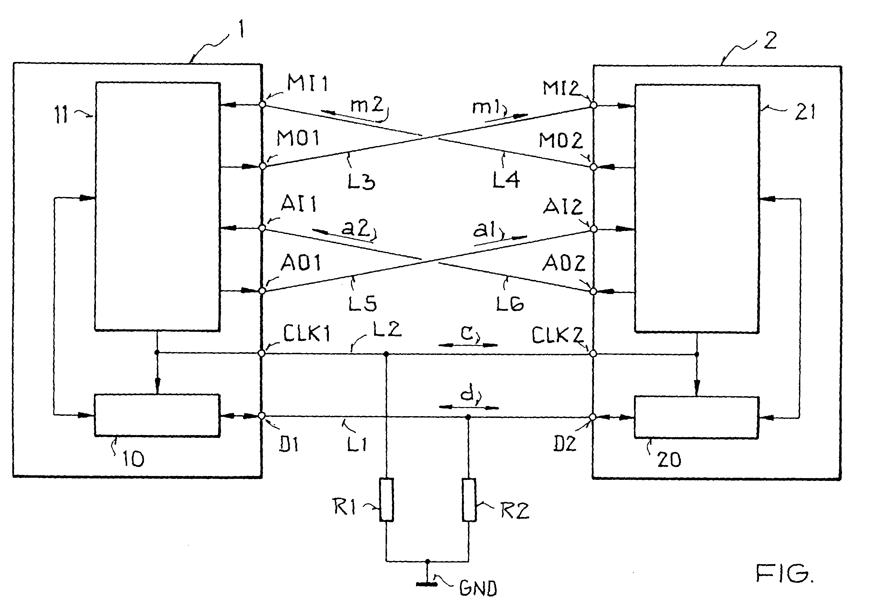

Die Erfindung wird nachfolgend anhand der Figur näher beschrieben. Die Figur zeigt als Ausführungsbeispiel ein Datenübertragungssystem zur seriellen Übertragung digitaler Daten zwischen zwei Stationen.

Gemäß der Figur weisen die Stationen 1, 2 - hierbei handelt es sich beispielsweise um zwei Mikroprozessoren eines Multiprozessorsystems - jeweils ein Schieberegister 10 bzw. 20 und jeweils eine Steuereinheit 11 bzw. 21 zur Ansteuerung des jeweiligen Schieberegisters 10 bzw. 20 auf. Sie weisen ferner jeweils einen Datenanschluß D1 bzw. D2 zur Übertragung eines den Daten entsprechenden Datensignals d, jeweils einen Taktanschluß CLK1 bzw. CLK2 zur Übertragung eines Taktsignal c, jeweils einen Modusausgang MO1 bzw. MO2 zur Abgabe eines dem Betriebsmodus der jeweiligen Station 1 bzw. 2 entsprechenden Modussignals m1 bzw. m2, jeweils einen Bestätigungsausgang AO1 bzw. AO2 zur Abgabe eines Bestätigungssignals a1 bzw. a2 sowie jeweils einen Moduseingang MI1 bzw. MI2 und jeweils einen Bestätigungseingang AI1 bzw. AI2 auf.

Die Datenanschlüsse D1, D2 sind über eine Datenleitung L1 miteinander verbunden, die Taktanschlüsse CLK1, CLK2 sind über eine Taktleitung L2 miteinander verbunden, der Modusausgang MO1 der ersten Station 1 ist über eine erste Signalleitung L3 mit dem Moduseingang MI2 der zweiten Station 2 verbunden, der Modusausgang MO2 der zweiten Station 2 ist über eine zweite Signalleitung L4 mit dem Moduseingang MI1 der ersten Station 1 verbunden, der Bestätigungsausgang AO1 der ersten Station 1 ist über eine dritte Signalleitung L5 mit dem Bestätigungseingang der zweiten Station 2 verbunden und der Bestätigungsausgang AO2 der zweiten Station 2 ist über eine vierte Signalleitung L6 mit dem Bestätigungseingang AI1 der ersten Station verbunden. Die Datenleitung L1 und die Taktleitung L2 sind zur Realisierung einer 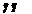 wired-or"-Verknüpfung jeweils über einen Widerstand R1 bzw. R2 mit einem Masseanschluß GND verbunden.

Beim Einschalten des Datenübertragungssystems und in Übertragungspausen, in denen keine Daten ausgetauscht werden, befinden sich beide Stationen 1, 2 im Slave-Betriebsmodus; es handelt sich hierbei um einen Bereitschaftsmodus, in dem die Stationen 1, 2 kein Taktsignal abgeben und in dem sie empfangsbereit für Daten sind.

Sollen Daten beispielsweise von der ersten Station 1 an die zweite Station 2 übertragen werden, so überprüft die erste Station 1 zunächst ob die zweite Station 2 im Slave-Betriebsmodus betrieben wird, indem sie das von der zweiten Station 2 am Modusausgang MO2 abgegebene Modussignal m2 auswertet. Die erste Station 1 wird, sobald sie erkennt, daß die zweite Station 2 im Slave-Betriebsmodus betrieben wird, aus dem Slave-Betriebsmodus in den Master-Betriebsmodus umgeschaltet; gegebenenfalls wird mit dem Umschalten gewartet, bis die zweite Station 2 aus dem Master-Betriebsmodus in den Slave-Betriebsmodus geschaltet wird. Mit dem Umschalten des Betriebsmodus der ersten Station 1 wird auch das von der ersten Station 1 an ihrem Modusausgang MO1 abgegebene Modussignal m1 invertiert, womit der zweiten Station 2 angezeigt wird, daß die erste Station 1 nunmehr die Steuerung der Datenübertragung übernommen hat und das hierzu erforderliche Taktsignal c generieren wird. Die erste Station 1 erfaßt noch den Zustand, d. h. den logischen Signalpegel, des von der zweiten Station 2 an ihrem Bestätigungsausgang AO2 abgegebenen Bestätigungssignals a2 und kann anschließend mit der Übertragung der Daten beginnen.

Zur Übertragung der Daten werden zunächst n Datenbits, beispielsweise 8 Bit, in das Schieberegister 10 der ersten Station 1 geschrieben und von da aus als Daten-signal d in das Schieberegister 20 der zweiten Station 2 übertragen. Die Übertragung der Datenbits erfolgt dabei synchron zum Taktsignal c, welches von der Steuereinheit 11 der ersten Station 1 erzeugt wird und über die Taktleitung L2 dem Schieberegister 20 der zweiten Station 2 zugeführt wird.

Der Empfang des letzten der n Datenbits löst in der zweiten Station 2 einen Empfangs-Interrupt aus, woraufhin die Datenbits aus dem Schieberegister 20 ausgelesen werden und der Zustand des Bestätigungssignals a2 zum Zeichen, daß die Daten empfangen wurden, invertiert wird. Das Aussenden des letzten der n Datenbits löst in der ersten Station 1 einen Sende-Interrupt aus. Als Antwort darauf überprüft die erste Station 1 den Zustand des Bestätigungssignals a2 und schreibt, sobald am Bestätigungssignal a2 eine Zustandsänderung erkannt wurde, die nächsten n Datenbits in das Schieberegister 10. Diese Datenbits werden in gleicher Weise wie die ersten n Datenbits zur zweiten Station 2 übertragen.

Nach der Übertragung aller Daten wird die erste Station 1 zurück in den Slave-Betriebsmodus geschaltet und dies der zweiten Station 2 durch Invertierung des am Modusausgang MO1 abgegebenen Modussignals m1 angezeigt. Beide Stationen befinden sich nun im Slave-Betriebsmodus und können bei Bedarf von sich aus die Übertragung weiterer Daten initiieren.

Im vorliegenden Beispiel wurden nur die Verfahrensschritte bei der Übertragung von Daten von der ersten Station 1 zur zweiten Station 2 beschrieben. In gleicher Weise werden auch Daten von der zweiten Station 2 zur ersten Station 1 übertragen.

Das beschriebene Ausführungsbeispiel läßt sich auch auf ein Datenübertragungssystem mit mehr als 2 Stationen erweitern. Die Stationen weisen in diesem Fall für jede zusätzliche Station einen zusätzlichen Moduseingang für das Modussignal der zusätzlichen Station sowie einen zusätzlichen Bestätigungseingang für das Bestätigungssignal der zusätzlichen Station auf. Das Datensignal d und das Taktsignal c werden bei einem derartigen Datenübertragungssystem von einer der Stationen gleichzeitig zu allen anderen Stationen übertragen.

## Patentansprüche

1. Verfahren zur Übertragung digitaler Daten zwischen mindestens zwei Stationen (1, 2), dadurch gekennzeichnet,
- daß jede Station (1, 2) in einen die Datenübertragung steuernden Master-Betriebsmodus und in einen zum Empfang von Daten bereiten Slave-Betriebsmodus schaltbar ist,
- daß jede Station (1, 2) ihren Betriebsmodus durch ein Modussignal (m1, m2) anzeigt,
- daß jede Station (1, 2) zum Aussenden von Daten in den Master-Betriebsmodus geschaltet wird, wobei die Einschaltung des Master-Betriebsmodus erst dann erfolgt, wenn die Station anhand des Modussignals (m1, m2) jeder anderen Station erkennt, daß keine andere Station im Master-Betriebsmodus betrieben wird und
- daß und jede Station (1, 2) nur solange im Master-Betriebsmodus geschaltet verbleibt, solange sie Daten aussendet.

2. Verfahren nach Anspruch 1, dadurch gekennzeichnet, daß jede Station (1, 2) im Master-Betriebsmodus ein Taktsignal (c) zur Synchronisation der Datenübertragung generiert und Daten seriell in zum Taktsignal (c) synchronen Bitzellen aussendet, und daß jede Station (1, 2) im Slave-Betriebsmodus die zu ihr gesendeten Daten nach Maßgabe des Taktsignals (c) übernimmt.

3. Verfahren nach Anspruch 2, dadurch gekennzeichnet, daß die im Master-Betriebsmodus betriebene Station (1, 2) eine vorgegebene Anzahl von Datenbits aussendet und mit dem Aussenden weiterer Datenbits wartet, bis der Empfang der ausgesendeten Datenbits von jeder anderen Station bestätigt wird.

4. Verfahren nach Anspruch 3, dadurch gekennzeichnet, daß jede im Slave-Betriebsmodus betriebene Station (1, 2) den Empfang der vorgegebenen Anzahl von Datenbits durch Invertierung eines an die im Master-Betriebsmodus betriebene Station ausgesendeten Bestätigungssignals (a1, a2) bestätigt.

5. Datenübertragungssystem zur Durchführung des Verfahrens nach einem der Ansprüche 2 bis 4, dadurch gekennzeichnet, daß jede Station (1, 2) einen Datenanschluß (D1, D2) für ein den Daten entsprechendes Datensignal (d), einen Taktanschluß (CLK1, CLK2) für das Taktsignal (c), einen Modusausgang (MO1, MO2) für ihr Modussignal (m1, m2), sowie für jede übrige Station (1, 2) einen dieser zugeordneten Moduseingang (MI1, MI2) aufweist, wobei die Datenanschlüsse (D1, D2) der Stationen (1, 2) miteinander verbunden sind, die Taktanschlüsse (CLK1, CLK2) der Stationen (1, 2) miteinander verbunden sind und der Modusausgang (MO1, MO2) jeder Station (1, 2) mit den zugeordneten Moduseingängen (MI1, MI2) der übrigen Stationen (1, 2) verbunden ist.

6. Datenübertragungssystem nach Anspruch 5, dadurch gekennzeichnet, daß jede Station (1, 2) einen Bestätigungsausgang (AO1, AO2) für ihr Bestätigungssignal (a1, a2), sowie für jede übrige Station (1, 2) einen dieser zugeordneten Bestätigungseingang (AI1, AI2) aufweist, wobei der Bestätigungsausgang (AO1, AO2) jeder Station (1, 2) mit den zugeordneten Bestätigungseingängen (AI1, AI2) der übrigen Stationen (1, 2) verbunden ist.

7. Datenübertragungssystem nach Anspruch 5 oder 6, dadurch gekennzeichnet, daß die Taktanschlüsse (CLK1, CLK2) über einen Widerstand (R1) mit einem Spannungsversorgungsanschluß (GND) verbunden sind.

8. Datenübertragungssystem nach einem der Ansprüche 5 bis 7, dadurch gekennzeichnet, daß die Datenanschlüsse (D1, D2) über einen Widerstand (R2) mit einem Spannungsversorgungsanschluß (GND) verbunden sind.

9. Datenübertragungssystem nach Anspruch 7 oder 8, dadurch gekennzeichnet, daß der Spannungsversorgungsanschluß (GND) ein Masseanschluß ist.
